# EUROPEAN PATENT APPLICATION

(11) **EP 2 858 057 A1**
(43) Date of publication of application: **08.04.2015**
(21) Application number: 13187274.9
(22) Date of filing: 03.10.2013
(51) Int. Cl.: G08G 1/056, G08G 1/054

(54) **System for traffic behaviour surveillance**

(71) Applicant: Kapsch TrafficCom AB, 551 10 Jönköping (SE)
(72) Inventor: Crona, Björn, 553 33 Jönköping (SE)
(74) Representative: Zacco Sweden AB

(57) **Abstract**

Use of a stereoscopic camera device (30) for traffic behaviour surveillance, wherein said stereoscopic camera device (30) is provided with a first camera adapted to capture a first image and a second camera adapted to capture a second image, directed at a road such that both the first and the second camera essentially monitors the same predetermined road section (15) and said stereoscopic camera (30) device thereby monitors said predetermined road section (15), and connected to processing means, where said processing performs image processing on said first and second images to produce a height image (20) of said predetermined road section (15), and said processing means are further adapted to determine, by analysing said height image (20) whether vehicles (14) on said predetermined road section (15) fulfils any of a predetermined number of conditions.

## Description

### TECHNICAL FIELD

The present invention relates to the use of stereoscopic cameras, a method and a system for traffic behaviour surveillance for gathering statistics or identifying traffic rule violations.

### BACKGROUND ART

Improving safety on roads is an important and critical task necessary to ensure a functioning road network. This can be achieved through a variety of means ranging from simple ones such as enacting traffic laws that govern the behaviour of vehicles on the road, setting speed limits, building obstacles such as speed bumps.

One especially dangerous manoeuvre drivers regularly perform while driving is the overtaking of other vehicles, this can often require the driver to be capable of judging distances and speed to several other moving objects, such as the vehicle or vehicles being overtaken, vehicles behind the driver, and vehicles travelling in the opposite direction, as the driver may have to travel in the same lane as oncoming traffic to complete the overtaking.

On some stretches of road, overtaking can be made safer by installing dividers, making the driver unable to cross into the opposite lane, reducing the number of accidents, however it is not always practical or desirable to install such dividers. On such roads, measures can still be taken to improve safety, by e.g. the use of patrolling traffic enforcement personnel travelling the roads, or stationed at vantage points by the road monitoring traffic. A heightened surveillance factor of a road may decrease the rate of which drivers perform more risky overtakings or other traffic violations to avoid being caught. To improve effectiveness, instead of employing personnel to physically surveil the roads, cameras may be used overlooking a larger road section, allowing an operator to monitor and perform surveillance on long stretches of road.

Monitoring and performing surveillance on long stretches of road can be a costly and time consuming project. Advances made to the technology of cameras, image processing and computers during the last decades have allowed for automated road surveillance systems to be used in place of human operators. Surveillance systems can now detect speeding vehicles, unsafe driving and accident scenes without the use of a human to actively look at the traffic to identify these scenes. Instead, with an automated system, a human operator needs only verify the traffic violation at a later reviewing stage. In some cases, especially with speeding cameras, a fine or a court summoning may be logged and dispatched automatically without manual verification by an operator.

Another related activity is gathering statistics over the road to identify whether changes need to be made to ensure the safety or function of the road.

WO 2012/038964 A2 discloses a system for monitoring and reporting incidences of potential traffic violations for moving traffic as well as parking violations. The system further allows for a manual inspection by an operator to determine that a violation has occurred.

However, deficiencies exist with the current automated solutions, especially limited ability to identify complex traffic situations and violations. Another deficiency is a limitation in the variety of offenses that may be captured by existing solutions. There is therefore room for an improved system for traffic behaviour surveillance.

### SUMMARY OF THE INVENTION

A purpose of the invention is therefore to provide an improved system for traffic behaviour surveillance. Another purpose of the invention is to provide an improved method for controlling a camera for traffic behaviour surveillance. A third purpose of the invention is to provide an inventive use for stereoscopic cameras for traffic behaviour surveillance.

The solution to the problem according to the invention is defined by the features of claims 1, 3 and 9. The remaining claims contain advantageous embodiments and further developments of the invention.

For the purposes of this text, the terms stereoscopic camera and stereo camera are considered equivalent, whereby in this text the term stereoscopic camera is used.

According to one aspect of the invention, a stereoscopic camera is used for traffic behaviour surveillance. The stereoscopic camera is provided with a first camera arranged to capture a first image, and a second camera arranged to capture a second image. The first and the second camera are both directed at the same predetermined road section, such that two separate images are produced, taken at the same time, such that a height image of said predetermined road section can be produced by performing image processing on the first and second images.

Preferably, the plane of the road is arranged at essentially the same position in the first and the second image. The stereoscopic camera is angled such that it is arranged to capture the predetermined road section, with the view of the camera extending from the horizon to the vicinity of the camera. This allows the stereoscopic camera to be used for traffic behaviour surveillance on a long stretch of road, which allows for analysis of complex traffic situations which takes place over longer distances or longer time such as e.g. overtakings. The stereoscopic camera may also be directed at the road in such a way that the predetermined road section stretches from one part of the horizon to another part of the horizon by e.g. using a wide angle lens.

The stereoscopic camera is preferably mounted on a support structure, e.g. a gantry, to allow it to be placed above and over the road at a height which at least allows large vehicles to pass beneath the camera. Mounting the stereoscopic camera on a structure adjacent to the road instead of above the road is also possible. The manner in which the stereoscopic camera is mounted may depend on several factors such as e.g. the direction and topology of the predetermined road section to be monitored.

The stereoscopic camera is connected to processing means, such as a microprocessor, said processing means being arranged to receive and process images. The processing means can be located essentially in the same structure as the stereoscopic camera, built into the same housing as the cameras, located in a housing near or on the support structure on which the stereoscopic camera is mounted, or may be located at a distance or may be connected to the stereoscopic camera by a network. The processing means are capable of performing image processing on the images captured by the stereoscopic camera to allow the extraction of data from said images. The processing means performs image processing on the images captured by the stereoscopic camera to produce a height image, of the road section at which the stereoscopic camera is being directed. The stereoscopic camera and the processing means are connected to a short term memory, in which the first and second images, as well as the height images are stored a predetermined time period, i.e. enough time to be processed.

Using a height image allows identification of objects on the road section, as well as determining the positions of said objects, allowing for better and higher precision traffic surveillance over current traffic surveillance solutions. Another advantage of measuring heights of objects to identify them and distinguish between them is that the problem of shadows being identified as objects is greatly reduced, which allows for more reliable and improved traffic behaviour surveillance.

Subsequently, variables for an object on the predetermined road section are determined from the height image. Said determining can be performed by the same processing means that performed the image processing or by additional processing means. Variables which are determined may be any of, but not limited to: speed of the object; heading of the object; position of the object relative to the traffic lane which is relevant for the heading of the object, i.e. the lane in which traffic is headed with the same heading as the object; position of the object relative to the road; distance of the object to other objects; and height of the object.

Which of these variables are to be determined varies depending on the requirements put upon the system, or on the travelling state of the object. Some but not all variables, such as the speed of the object, require the use of multiple height images to be determined. Thus, in a preferred embodiment of the invention, the stereoscopic camera continuously captures and records images, which are processed by the image processing means and subsequently used to determine variables. This allows tracking of vehicles as these move across the predetermined road section, whereby complex traffic situations can be analysed. Using multiple height images captured at different times to determine variables also allows better precision in determining the momentary value of the variables.

Computations are performed on said determined variables to compare them to a set of predetermined conditions associated with the travel and status of a vehicle, i.e. threshold values, to determine if a vehicle fulfils any of the set of predetermined conditions. Conditions are chosen to detect any of, but not limited to instances of: overtaking, speeding, through traffic, wildlife crossings; an allowed distance to oncoming traffic during overtaking; a maximum or minimum vehicle speed relative other vehicles on said predetermined road section; a maximum or minimum vehicle speed; a vehicle heading; a minimum or maximum distance between a vehicle and other vehicles on said predetermined road section; an allowed vehicle position relative the road; and a vehicle position relative the lane the vehicle is currently travelling in, or reaching a minimum or maximum threshold on e.g. travelling time on the predetermined road section. This allows for surveillance of traffic behaviour, by allowing the behaviour of vehicles to be continuously analyzed and compared to predetermined conditions. As the vehicles on said predetermined road are tracked, conditions being fulfilled by vehicles can linked to the vehicle which has fulfilled the condition.

More advanced traffic situations may be identified, one such preferable situation relates to safe overtaking. Determining whether a vehicle performs a safe overtaking requires the use of several variables and conditions. One such traffic situation involves three vehicles, in which a first vehicle is overtaking a second vehicle travelling on a road with one lane heading in one direction and another lane heading in the opposite direction. Both the first and the second vehicles are travelling in the same direction, while a third vehicle is travelling in the opposite direction in the opposing lane. In this case, determining whether the overtaking was performed in a safe manner requires several variables and conditions. These include the speeds of the first, second, and third vehicles, the distances between the vehicles, positions of the first vehicle relative the predetermined road section, and a time spent by the first vehicle in the same lane as the third vehicle (i.e. time spent in the same lane as oncoming traffic). The variables and threshold values, at which the conditions are considered to be fulfilled, and which conditions are necessary to determine whether the overtaking was safe may differ depending on which jurisdiction and/or traffic laws govern the predetermined road section.

Another example of a situation that can be identified is whether a road is congested or not, which also requires several variables to be determined, evaluated in relation to a set of conditions, possibly combining average speeds, travel times and/or number of vehicles.

If fulfilment of a condition or combination of conditions has occurred, which are linked to a defined situation, an occurrence of this situation is saved. What is saved can be anything from a simple boolean indicative of traffic congestion, to a counter counting occurrences of any conditions being fulfilled, to a set of images showing said situation, along with a timestamp, a date and possibly even a unique identifier identifying which condition was fulfilled.

Preferably, if a vehicle has been determined to fulfil one of the set of predetermined conditions which correspond to a traffic violation, a recording of said violation is saved, preferably along with data relevant to the violation such as a timestamp, date, an identifier identifying which condition was fulfilled, i.e. which traffic law was violated etc.

In one advantageous development of the invention, when a vehicle has been deemed to fulfil a predetermined condition corresponding to a traffic violation, data saved in the short term memory relevant to the traffic violation, such as e.g. a set of images capturing the violation, either unprocessed, processed or both, are stored into a long term memory. Occurrences may be stored continuously or at intervals in the long term memory. Storing images captured in a long term memory allows these images to be used as evidence of the fulfilling of the condition, especially important for conditions relating to traffic violations.

Equipping a road with advanced traffic behaviour surveillance according to the invention allows the catching of hazardous drivers, which were previously difficult to detect. Similarly, the knowledge of such surveillance being performed on a road section may influence drivers to not perform hazardous driving manoeuvres. In either way, the safety of the road can be increased, and at a far lower cost and higher efficiency than what could be accomplished by employing operators studying traffic cameras or that of traffic patrols. Further, the images captured may be used as evidence by law enforcement, e.g. when prosecuting drivers charged with traffic violations.

Additionally, the size of a vehicle may be detected. This may be used for e.g. classification purposes, identifying a type of vehicle based on e.g. its size. Further, the system could be configured to only associate certain predetermined conditions with a certain type of vehicle, such as e.g. not allowing trucks or other large vehicles to overtake, or having different threshold values for a certain type of vehicles.

In an advantageous development of the invention, a license plate image of the license plate of a vehicle determined to have fulfilled a condition is also captured. This capture may be performed at a specific capture point or at any point which allows for a good image of the license plate to be captured. This license plate image may be captured by the stereoscopic camera, but in an alternative development of the invention, a third camera is used to capture this image, preferably suspended on the same support structure as the stereoscopic camera. The license plate image may subsequently be stored together with and linked with other data relevant to the fulfilling of a condition, such as e.g. images showing the fulfilling of a predetermined condition. This allows a vehicle fulfilling a condition to be identified through e.g. a register of license plates.

In another advantageous development of the invention, an image of the driver of a vehicle determined to have fulfilled a condition is also captured. As with the license plate image, this capture may be performed at a specific capture point or at any point which allows for a good image of the driver to be captured. This image of a driver may be captured by the stereoscopic camera, but in an alternative development of the invention, a fourth camera is used to capture this image, preferably suspended on the same support structure as the stereoscopic camera. Like with the license plate image, this image of a driver may subsequently be stored together with and linked with other data relevant to the fulfilling of a condition, such as e.g. images showing the fulfilling of a predetermined condition. This allows the driver of a vehicle which fulfils a condition to be identified, which may be necessary in certain jurisdictions to prosecute traffic violations. Note that traffic behaviour surveillance according to the invention may contain both capture a license plate image, and an image of a driver, only one of them, or neither of them depending on the requirements put on the system.

Data relevant to the occurrence of a fulfilment of a predetermined condition may be transmitted for further processing or use as e.g. evidence. A network may also be used to control and configure the cameras, processing means or memory, and may also further be used to modify the predetermined conditions.

The processing means may also be arranged to process the images in ways which reduce the size of the data needed to be stored or transmitted. This include reducing the number of images to be stored or transmitted, reducing the resolution of images to be stored or transmitted or performing partial resolution reduction on areas of said images which are predetermined to be of lesser priority. In one alternative embodiment, these areas with lesser priority are omitted.

### BRIEF DESCRIPTION OF THE DRAWINGS

The invention will be described in greater detail in the following, with reference to the embodiments that are shown in the attached schematic drawings, in which
- Fig. 1a, b: shows a schematic view of a stereoscopic camera monitoring a road section,
- Fig. 2a, b: shows a schematic view from a camera monitoring a predetermined road section during an overtaking,
- Fig. 3a, b: shows a schematic of a height image of a predetermined road section during an overtaking,
- Fig. 4: shows a flowchart over a method for traffic behaviour surveillance, and
- Fig. 5: shows a schematic of a system for traffic behaviour surveillance.

### DETAILED DESCRIPTION

The embodiments of the invention with further developments described in the following are to be regarded only as examples and are in no way to limit the scope of the protection provided by the patent claims.

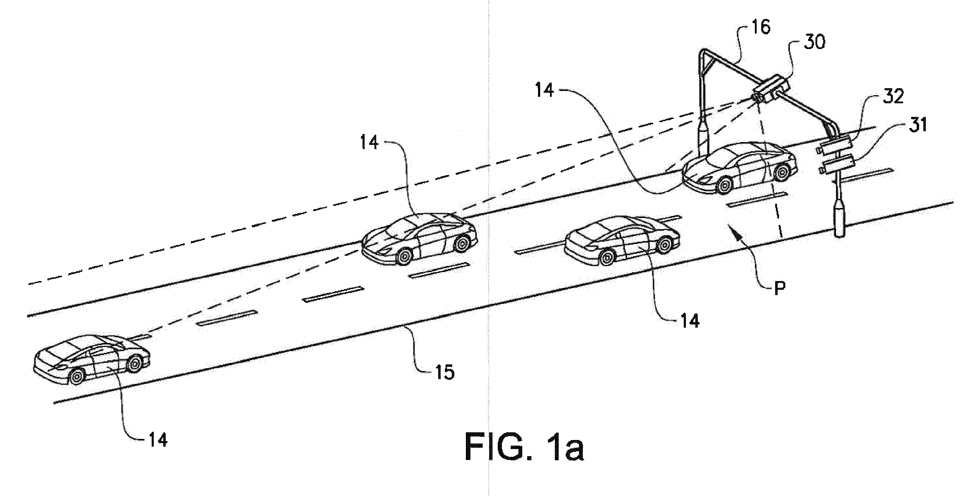

Fig. 1a shows a road section which is part of a predetermined road section 15 being monitored by a stereoscopic camera 30 according to the invention. On said predetermined road section 15, vehicles 14 are positioned and currently travelling along said predetermined road section 15. The stereoscopic camera 30 is suspended on a support structure 16 above said predetermined road section 15.

The stereoscopic camera 30 is provided with a first camera adapted to capture a first image and a second camera adapted to capture a second image. The stereoscopic camera 30 is directed at said road such that both the first and the second camera essentially monitors the same predetermined road section 15, and said stereoscopic camera 30 thereby monitors said predetermined road section 15 and continuously captures said first and second images.

The support structure 16 may be any support structure which allows for the stereoscopic camera 30 to be suspended at a height above said predetermined road section 15. In Fig. 1a the support structure 16 stretches from one side of the road to the other, and allows the stereoscopic camera 30 to be suspended straight above the predetermined road section 15 at a height sufficient for large vehicles such as e.g. trucks, tractors and mobile cranes to pass beneath the support structure 16 and stereoscopic camera 30. In another development of the invention, the support structure (not shown) instead extends from the side of the road to above the predetermined road section 15, such that the stereoscopic camera 30 is suspended straight above the predetermined road section 15. The support structure 16 may also allow the stereoscopic camera 30 to be suspended adjacent to said predetermined road section 15, at a height at which said stereoscopic camera 30 overlooks said predetermined road section 15.

The predetermined road section 15 at which the stereoscopic camera 30 is directed extends from essentially below the stereoscopic camera 30 to essentially the horizon, in such a way that the stereoscopic camera 30 monitors the road for as extensive of a distance as possible or desirable.

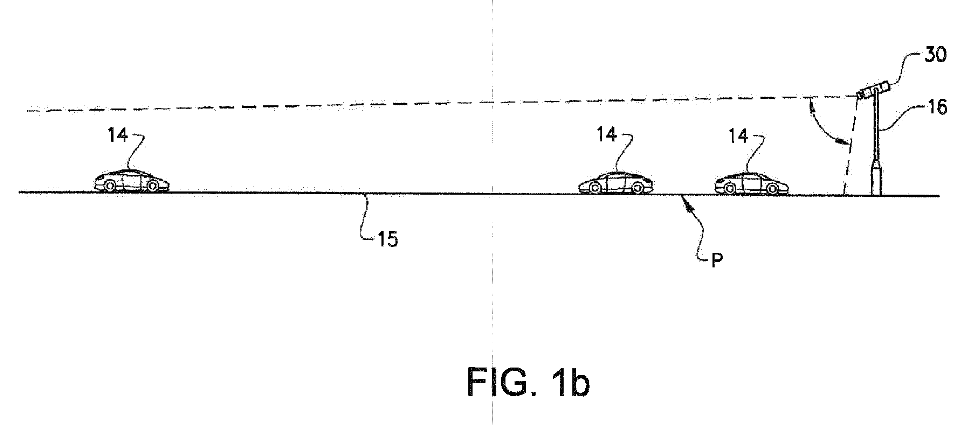

Fig. 1b shows a side view of a road section, part of which is being monitored by a stereoscopic camera 30 according to the invention. Here the predetermined road section 15 stretches from essentially below the stereoscopic camera 30 to essentially the horizon, and said camera 30 is mounted on a support structure 16. Vehicles 14 travelling on the road are being monitored as long as they are within the view of the stereoscopic camera. Not shown in fig. 1b are the optional third camera 31 and fourth camera 32 (shown in fig. 1a) adapted to capture a license plate image and an image of a driver respectively as the vehicle passes a capture point P.

The stereoscopic camera 30 is connected to processing means 35 such as a microprocessor. Said processing means 35 performs image processing on said first and second images to produce a height image 20 of said predetermined road section 15. In a preferred embodiment of the invention, these height images 20 are continuously produced by the processing means 35. Performing this image processing to produce a height image 20 is known in the art and will not be further described herein.

Said processing means 35 are further adapted to determine, whether vehicles 14 on said predetermined road section 15 fulfils any of a number of predetermined conditions associated with said vehicles 14. This is done by the system by analysing said height images 20 in order to determine for one or a plurality of vehicles 14 on the predetermined road section 15 a plurality of variables. These variables are then compared to value thresholds to determine whether any of a set of predetermined conditions have been fulfilled. By analysing, for one or a set of vehicles (14), which conditions are fulfilled, and which are not, the traffic situations which take place on the predetermined road section 15 can be determined. In a preferred embodiment, these variables are continuously updated as new height images 20 are produced in order to track vehicles 14 on the predetermined road section 15.

The variables that make up said plurality of variables are those variables which are necessary to determine whether a vehicle 14 located on the predetermined road section 15 fulfils any of the predetermined conditions. Thus the variables that results from the analysis of the height images 20 may differ from one system to the next, as the predetermined conditions may differ between systems. Variables which are determined may be any of, but not limited to: speed of the vehicle 14; heading of the vehicle 14; position of the vehicle 14 relative to the traffic lane which is relevant for the heading of the vehicle 14, i.e. the lane in which traffic is headed with the same heading as the vehicle 14; position of the vehicle 14 relative to the road; distance between the vehicle 14 to another vehicle 14; and height of the object.

Computations are then performed on the plurality of variables to determine whether a vehicle 14 has fulfilled any of a predetermined number of conditions. In a preferred embodiment, these computations are continuously performed as the variables are updated.

The predetermined conditions may include for one or each vehicle 14: an allowed distance to oncoming traffic during overtaking; a maximum or minimum vehicle 14 speed relative other vehicles 14 on said predetermined road section 15; a maximum or minimum vehicle 14 speed; a vehicle 14 heading; a minimum or maximum distance between a vehicle 14 and other vehicles 14 on said predetermined road section 15; an allowed vehicle 14 position relative the road; and a vehicle 14 position relative the lane the vehicle 14 is currently travelling in.

In one development of the invention, the predetermined conditions correlate to traffic laws, such that fulfilling a predetermined condition constitutes a violation of a traffic law, and instances of: vehicles 14 being located on said predetermined road section 15, vehicles 14 performing overtaking, speeding, through traffic, wildlife crossing, or traffic congestion. In a further development of the invention, the traffic situations which, by analysis of the conditions fulfilled, are determined to occur, correspond to traffic laws.

Which conditions are part of the predetermined conditions may depend on the requirements put on the system, such as e.g. whether the system is to be used for statistical traffic behaviour surveillance or traffic violation surveillance, and may further depend on the applicable traffic laws in the jurisdiction governing the road to be monitored.

In one development of the invention, the size of a vehicle 14 is detected. A vehicle can be classified i.e. the type of vehicle 14 may be identified. based on e.g. its size or height. Further, the system may configured to only associate certain predetermined conditions with a certain type of vehicle 14, such as to e.g. not allow trucks or other large vehicles 14 to overtake, or having different threshold values for a certain type of vehicles 14. This may also include e.g. different speed limits, or allowed vehicle positions relative the road for e.g. trucks and buses.

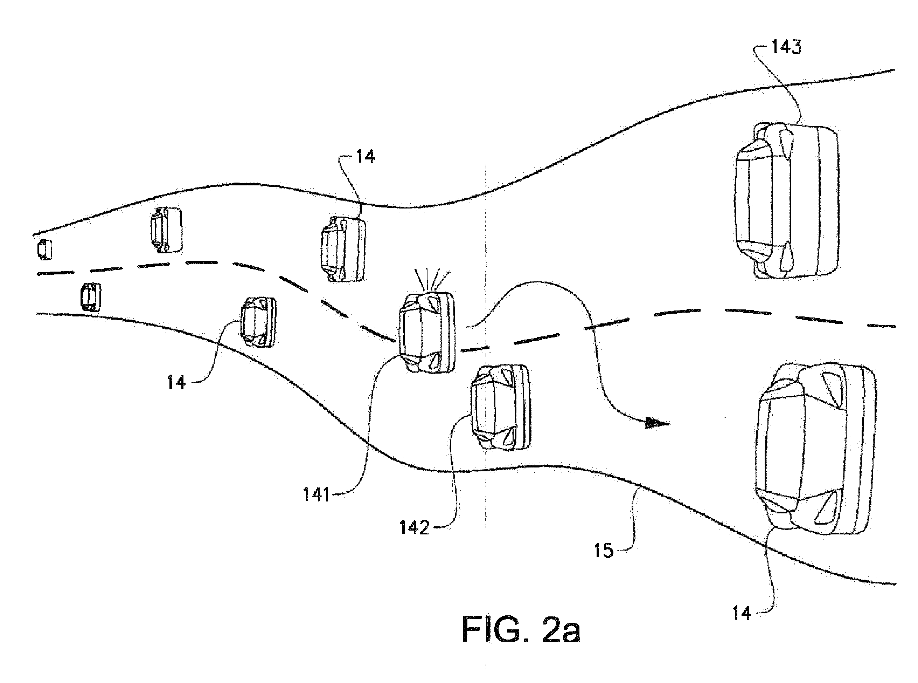

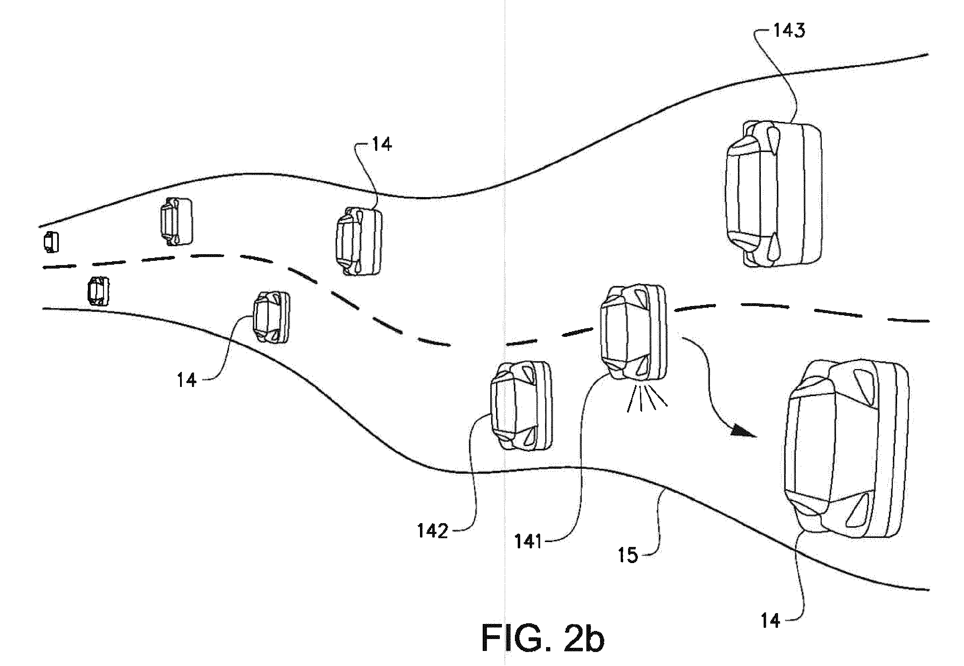

A traffic situation, where an overtaking occurs will now be described. Figs. 2a and 2b each show an image from the first or the second camera overlooking a predetermined road section 15, taken at a first and second time respectively. In practice, the stereoscopic camera 30 takes more images, but for brevity, only two are shown. In Fig. 2a, a first vehicle 141 is in the process of travelling into the opposing lane in order to overtake a second vehicle 142. A third vehicle 143 is travelling in the opposite direction in the opposing lane. In Fig. 2b, the first vehicle 141 has passed the second vehicle 142 and is returning to its original lane to complete the overtaking of the second vehicle 142. The third vehicle 143 is now about to pass said first and second vehicles 141, 142.

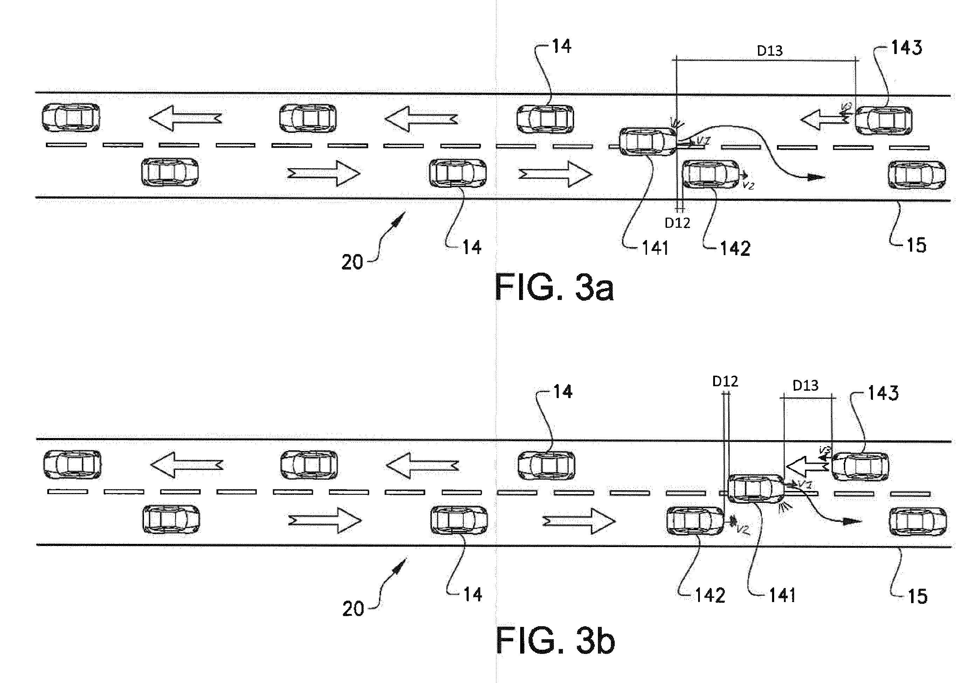

Figs. 3a and 3b each show a height image 20 over the predetermined road section 15, at said first and second time respectively. The height image 20 is the product of the process described above/performing image processing by the processor 35 on the first and second images. The processing unit 35 performs analysis on this height image to determine any of a plurality of variables.

In the example situation shown in Figs. 2a, 2b, 3a, and 3b, the first vehicle 141 will first be determined to be crossing into the opposing lane, as the variable related to the first vehicle 141 position relative the traffic lane the first vehicle 141 is currently travelling will be determined to have reached a threshold. A condition of a vehicle leaving his lane will thus be fulfilled. As the first vehicle 141 passes the second vehicle 142, the variable related to distances between vehicles will reach a threshold indicating that the first vehicle 141 has passed the second vehicle 142, fulfilling the relevant condition. As the first vehicle 141 returns to the lane headed in the same direction as the first 141 and second vehicles 142, the variable related to the position of the first vehicle 141 relative the traffic lane the first vehicle 141 is currently travelling will once again be determined to reach a threshold, fulfilling the relevant condition of having changed lanes. Using the data of the fulfilled conditions, the first vehicle 141 will be determined to have overtaken the second vehicle 142, and a condition corresponding to an overtaking will be considered to have been fulfilled. Another determining which will be performed is whether the overtaking was safe or legal; this might e.g. be dependent on e.g. the distance D13 between the first vehicle 141 and the third vehicle 143, the distance D12 between the first vehicle 141 and the second vehicle 142, how close the vehicle 141 was to colliding with the second vehicle 142 or the third vehicle 143, based on the speed V1, V2, V3 of each of the three vehicles 141142 143, and whether overtaking was allowed in that particular area.

An occurrence of said fulfilment is subsequently saved. In one embodiment of the invention, this is done by modifying an integer in a memory, said integer being for instance e.g. a counter counting the number of vehicles 14 currently travelling the predetermined road section. Other possibilities include the number of vehicles 14 having passed the predetermined road section 15. In a further development of the invention, the saving of said occurrence includes more data, such as e.g. a timestamp and a date for when a vehicle 14 travelled on the predetermined road section 15. The data recorded from an occurrence may also be used indirectly, such as e.g. to determine an average vehicle 14 speed or average number of vehicles 14 travelling on the predetermined road section 15.

In a further development of the invention, the data saved is comprised of a set of images from the stereoscopic camera 30. The images saved may be unmodified images from one of or both the first and second camera which make up the stereoscopic camera 30. The images saved may also be the height image 20. Preferably, the images saved show the fulfilment of at least one of the predetermined conditions. These images may later be used as evidence to e.g. prove that a traffic violation occurred. Thus, it is preferred that additional data be saved along with the images, such as e.g. a timestamp, a date and possibly an indication of which condition was fulfilled, where said condition fulfilment may correlate to a traffic rule violation.

In a further development of the invention, the step of saving an occurrence, whether said occurrence is saved as an integer, a set of images or any other form of data, comprises storing data indicative of said fulfilling of a predetermined condition to a persistent storage.

In a further development of the invention, a third image is captured, said image being an image of a license plate of a vehicle determined to have fulfilled any of the predetermined conditions is also captured and stored together with other images being indicative of said fulfilling of predetermined conditions.

In one development of the invention, the license plate number may be determined from the license plate image, and if e.g. an overtaking was determined to be performed in an unsafe or illegal manner, a traffic fine or the like may be automatically dispatched by the system.

In another development of the invention, a fourth image is captured, said image being an image of a driver of a vehicle determined to have fulfilled any of the predetermined conditions is also captured and stored together with other images being indicative of said fulfilling of predetermined conditions.

Said third and fourth images may be captured by the first or the second camera, and preferably as the vehicle 14 having fulfilled said predetermined condition passes a capture point P, said capture point P selected as one which allows for a sufficiently good image of said license plate or driver of said vehicle 14.

Shown in Fig. 1a is an optional third camera 31, said third camera 31 adapted to capture an image of the license plate of a vehicle 14 considered to have fulfilled one of the predetermined conditions. Said third camera 31 is also suspended on the support structure 16 along with the rest of the cameras. Said third camera 31 may be directed at a capture point P for capturing an image of said license plate, said capture point P selected as one which allows a license plate number of the vehicle 14 to be determined by visual inspection or a license plate number algorithm from the captured image when said image is taken as said vehicle 14 passes the capture point P.

Also shown in Fig. 1a is an optional fourth camera 32, said fourth camera 32 adapted to capture an image of a driver or an operator of a vehicle 14 considered to have fulfilled one of the predetermined conditions. Said fourth camera 32 is also suspended on the support structure 16 along with the rest of the cameras. Said fourth camera 32 may be directed at a capture point P for capturing an image of said driver or operator, said capture point P selected as one which allows for a driver of the vehicle 14 to be identified by visual inspection or facial recognition algorithm from the captured image when said image is captured as said vehicle 14 passes the capture point P. In an alternative development of the invention, the image of a driver or operator of a vehicle 14 considered to have fulfilled one of the predetermined conditions is captured by the third camera 31.

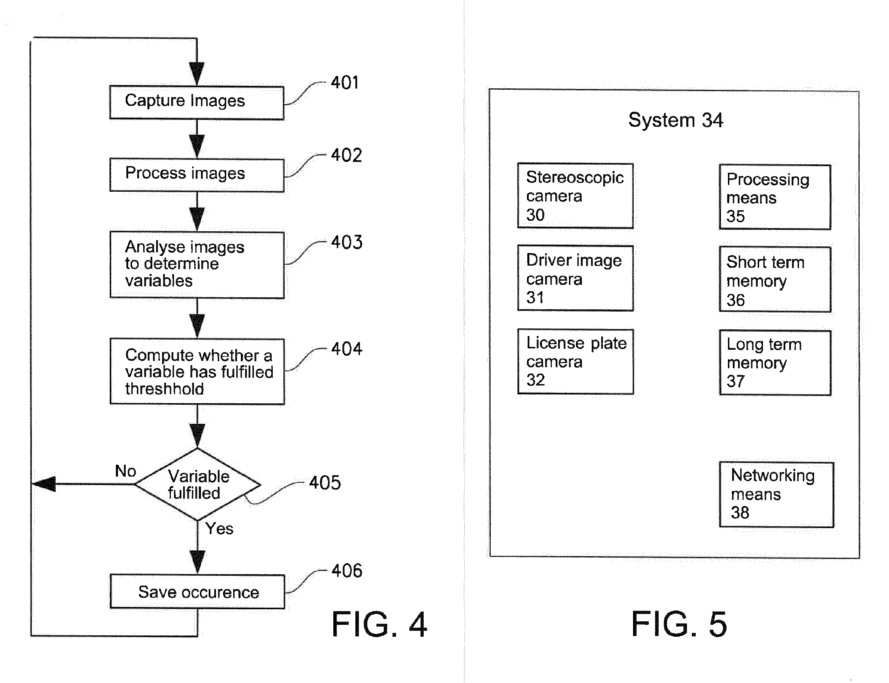

A flowchart of a method according to the invention is shown in figure 4. The method comprises the steps of: capturing 401 a first and a second image; processing 402 said images to produce a height image 20 thereof; analysing 403 said height image 20 to determine for a vehicle 14 located on said predetermined road 15 section, at least one of a plurality of variables depending on the travelling state of a vehicle 14; computing 404 whether any of said plurality of variables has fulfilled any of predetermined number of conditions associated with said vehicles 14; and if not; begin anew with said step of capturing 401 images; otherwise, save 406 an occurrence of said fulfilment of a predetermined condition; and subsequently begin anew with said step of capturing 401 images.

In one development of the invention, the step of saving 406 an occurrence comprises storing a set of images from the stereoscopic camera 30 showing said fulfilling of a predetermined condition in a long term memory.

In one development of the invention, the method further comprises the steps of: capturing a third image of a license plate of a vehicle 14 determined to have fulfilled any of said predetermined conditions; and storing said third image in a persistent storage and linked to said stored set of images from said first and second camera.

In one development of the invention, the method further comprises the steps of: capturing a fourth image of a driver of a vehicle 14 determined to have fulfilled any of said predetermined conditions, where said image capture of a driver is performed as said vehicle passes a predetermined capture point; and storing said fourth image in a persistent storage and linked to said stored set of images from said first and second camera.

In one development of the invention the method further comprises the step of: transmitting 407, the recorded, saved or stored data relevant to said fulfilling of said predetermined conditions. This transmission is preferably done to a receiver capable of storing the data, or to allow the data to be accessed by law enforcement, to be used as evidence in the prosecuting of a traffic violation.

In one development of the invention the method further comprises the step of: before images relevant to said fulfilling of said predetermined conditions are saved or transmitted, process said images further to reduce the resolution of areas of the images with low priority, such as e.g. areas of the captured image which do not contain roads. The amount of images to be transferred may also be reduced.

Fig. 5 shows a schematic of a system for traffic behaviour surveillance according to the invention. The system comprises a stereoscopic camera device 30, a processing unit 35 adapted to process images from said stereoscopic camera device 30, short term memory means 36 and long term memory means 37. The stereoscopic camera 30 is provided with a first camera adapted to capture a first image, and a second camera adapted to capture a second image. The stereoscopic camera 30 is directed at a road such that both the first and second camera essentially monitors the same predetermined road section 15 and said stereoscopic camera device 30 thereby monitors said predetermined road section 15. Images captured by said stereoscopic camera 30 are continuously stored into the short term memory 36. The first and second images are processed to produce a height image of said predetermined road section (using said processing unit?). The system performs a method according to the above.

In a further development of the invention, the system is further equipped with a license plate camera 31 adapted to capture a license plate image of a vehicle passing a capture point. In a further yet development of the invention the system is further equipped with a driver image camera 32 adapted to capture an image of a driver of a vehicle passing a capture point.

In a further development of the invention, the system is equipped with networking means 38, said networking means 38 enabling the system to transmit data relevant to the fulfilling of a predetermined condition across a network.

## Claims

1. Use of a stereoscopic camera device (30) for traffic behaviour surveillance, wherein said stereoscopic camera device (30) is
• provided with a first camera adapted to capture a first image and a second camera adapted to capture a second image,
• directed at a road such that both the first and the second camera essentially monitors the same predetermined road section (15) and said stereoscopic camera (30) device thereby monitors said predetermined road section (15),
• connected to processing means, where said processing means performs image processing on said first and second images to produce a height image (20) of said predetermined road section (15), and said processing means are further adapted to determine, by analysing said height image (20) whether vehicles (14) on said predetermined road section (15) fulfils any of a predetermined number of conditions associated with said vehicles (14).

2. Use of a stereoscopic camera device (30) according to claim 1, wherein said predetermined conditions at least include one of: an allowed distance to oncoming traffic during overtaking; a maximum or minimum vehicle (14) speed relative other vehicles (14) on said predetermined road section (15); a maximum or minimum vehicle (14) speed; a vehicle (14) heading; a minimum or maximum distance between a vehicle (14) and other vehicles (14) on said predetermined road section (15); an allowed vehicle (14) position relative the road; and a vehicle (14) position relative the lane the vehicle (14) is currently travelling in.

3. Method for controlling a stereoscopic camera device (30) for traffic behaviour surveillance, said stereoscopic camera (30) comprising at least a first and a second camera, wherein said first camera capturing first images and said second camera capturing second images, wherein said stereoscopic camera device adapted to be directed at a road such that both the first and the second camera essentially monitors the same predetermined road section (15) and said stereoscopic camera device (30) thereby monitors said predetermined road section (15), the method comprising the steps of continuously:
capturing a first and a second image;
processing said first and second images to produce a height image (20) there from;
analysing said height image (20) to determine for a vehicle (14) located on said predetermined road section (15), at least one of a plurality of variables, depending on the travelling state of a vehicle (14);
computing whether any of said plurality of variables has fulfilled any of a predetermined number of conditions associated with said vehicle (14); and
saving an occurrence of said fulfilment.

4. Method according to claim 3, wherein said step of saving an occurrence comprises storing a set of images from said first and second camera showing said fulfilling of predetermined condition in a long term memory (37).

5. Method according to claim 4, wherein the method further comprises the steps of: capturing a third image of a license plate of a vehicle (14) determined to have fulfilled any of said predetermined conditions; and storing said third image in a long term memory (37) and linked to said stored set of images from said first and second camera.

6. Method according to any of claims 4 to 5, wherein the method further comprises the steps of: capturing a fourth image of a driver of a vehicle (14) determined to have fulfilled any of said predetermined conditions, where said image capture of a driver is performed as said vehicle (14) passes a predetermined capture point (P); and storing said fourth image in a long term memory (37) and linked to said stored set of images from said first and second camera.

7. Method according to any of claims 3 to 6, wherein the method further comprises, transmitting recorded or stored data relevant to said fulfilling of said predetermined conditions.

8. Method according to any of claims 4 to 7, wherein, before a step of saving or transmitting, the resolution of less prioritized areas of the image or images to be saved or transmitted are reduced.

9. System (34) for traffic behaviour surveillance, wherein said system (34) comprises:
• a stereoscopic camera device (30),
• a processing unit (35) adapted to process images from said stereoscopic camera (30),
• a short term memory (36), and
• a long term memory (37),
wherein said stereoscopic camera device (30) is provided with a first camera adapted to capture a first image, and a second camera adapted to capture a second image and said stereoscopic camera device (30) is directed at road such that both the first and the second camera essentially monitors the same predetermined road section (15) and said stereoscopic camera device (30) thereby monitors said predetermined road section, wherein images captured by said stereoscopic camera (30) are continuously stored into said short term memory (36), wherein said first and second images are processed to produce a height image (20) of said predetermined road section (15), **characterised in that** the system is performing a method according to any of claims 3 to 8.

10. System according to claim 9, wherein said system further is provided with a third camera (31) adapted to capture a licence plate image of a vehicle passing a capture point (P).

11. System according to any of claims 9 to 10, wherein said system is further provided with a fourth camera (32) adapted to capture an image of a driver of a vehicle passing a capture point (P).

12. System according to claim 10 or 11, wherein a capturing of said licence plate image or said image of a driver is triggered by a predetermined condition being determined to be fulfilled and said licence plate image or said image of a driver is linked with and stored with said recording.
